# EUROPEAN PATENT SPECIFICATION

(11) **EP 0 375 230 B1**
(45) Date of publication and mention of the grant of the patent: **29.03.1995**
(21) Application number: 89312874.4
(22) Date of filing: 11.12.1989
(51) Int. Cl.: G21C 9/02

(54) **Self-acting safety for nuclear reactors**
Selbsttätige Sicherheitseinrichtung für Kernreaktor
Dispositif de sécurité auto-actionné pour réacteur nucléaire

(30) Priority: 19.12.1988 US 286207
(43) Date of publication of application: 27.06.1990
(73) Proprietor: GENERAL ELECTRIC COMPANY, Schenectady, NY 12345 (US)
(72) Inventor: Kaplan, Samuel, Los Gatos California 95030 (US); Murata, Ronald Edward, Sunnyvale California 94086 (US)
(74) Representative: Pratt, Richard Wilson

(56) References cited:
- FR-A- 1 211 272
- FR-A- 1 487 533
- FR-A- 2 353 929
- GB-A- 2 185 345

## Description

The United States Government has rights in this invention pursuant to Contract No. DE-AC0384SF15158 awarded by the U.S. Department of Energy.

This invention relates to nuclear fission reactors employing a liquid metal as the coolant-heat conveying medium. The invention includes an inherent safety feature for service in power generating, liquid metal cooled nuclear fission reactors.

As is known, nuclear fission reactions are dependent upon and controlled by the availability of neutrons to initiate and sustain the heat producing fission or splitting of the fissionable fuel atoms or molecules. Neutron absorbing materials are therefore utilized as a means for governing the occurrence of the fission reaction and its rate through their application in differing degrees of proximity with respect to the mass of fissionable fuel.

Common neutron absorbing materials of apt capacity for governing fission reactions include boron carbide and oxides of lanthanide rare earths. Such materials are sometimes referred to as nuclear "poisons" in the nuclear industry. Neutron absorbents or poisons are conventionally enclosed within rods or elongated containers for insertion to an appropriate extent into a body or core of fissionable fuel, and withdrawal therefrom, as a means for regulating the rate of its fission reaction or suspending the reaction through control of the available neutrons for interaction with the fuel.

However, the operation or movement of the typical neutron absorbent control rods or devices is normally dependent upon mechanical or hydraulic means and a source of motivating power as well as initiating means such as switches or valves and operating personnel or determinative devices such as computers or indicating instruments. Thus, a mechanical or hydraulic failure, loss of power or human error, etc., can result in a failure of the control system and an unrestrained nuclear fission reaction which can produce significant damage to the costly system and even to the environment.

This invention deals with liquid metal, for example sodium, cooled power generating nuclear reactors such as disclosed in United States Letters Patent No. 4,508,677, issued April 2, 1985.

GB-A-2185345 discloses a shutdown rod assembly for a liquid metal cooled nuclear reactor of the type which uses a pumped flow of coolant through a wrapper to maintain a control rod in a raised-above core position. FR-A-1211272 discloses a similar arrangement. Nevertheless, further improvements in safety measures are felt to be desirable.

The present invention provides a nuclear reactor pressure vessel enclosing therein a core of fissionable fuel retained within a plurality of elongated containers assembled adjacent to each other in a generally vertical, parallel group, said pressure vessel containing a liquid metal coolant-heat conveying medium comprising a metal which is liquid at the range of the reactor operating temperatures, pumping means for circulating the liquid metal coolant-heat conveying medium upward through the core of fissionable fuel and to a heat transferring unit and then back up again through the fuel core for removing thermal energy generated in the core by fissioning fuel, and at least one safety device located within the fuel core, characterized by each safety device comprising a generally vertical, elongated housing closed at its upper end and containing a gas and having an opening at its lower end whereby upward circulating coolant-heat conveying liquid metal can enter into the lower end of the elongated housing, said elongated housing having an upper and a lower stop member adjacent the ends thereof and a free floating sealed canister retained therein between the stop members adjacent each end thereof and containing a neutron absorbing material whereby said canister of neutron absorbing material can freely move both upwards and downwards within the elongated housing in a span between the stop members in response to degrees of force produced by the entry of liquid metal coolant-heat conveying medium into the opening in the lower end of the elongated housing.

This invention comprises a novel safety device and measure for insuring a dormant state of the fissionable fuel in a liquid metal cooled, power generating nuclear reactor. The device of the invention provides neutron absorbing means for removing the fission reaction sustaining neutrons from a mass of fissionable fuel, which are not dependent upon mechanical measures, motivating power, personnel action or the like. Activation of the neutron absorbent means entails an inherent force, namely gravity.

As disclosed herein there is provided an improved liquid metal cooled nuclear fission reactor, specifically a sodium cooled power generating nuclear reactor, with enhanced safety which does not rely upon fallible mechanical or hydraulic systems, power sources, determinative instruments or operating personnel. As a safety device or measure, the reactor has a novel means for inherently effective control of the nuclear fission reaction. The safety device renders the fissionable fuel inactive through the imposition of a neutron absorbent which is activated by the inherent force of gravity.

In the accompanying drawings:
Figure 1 comprises a diagrammatic cross-sectional view of one type of liquid metal cooled nuclear reactor illustrating the application of the safety device of this invention;
Figures 2 and 3 comprise cross-sectional views of the safety device of this invention in each of its operating positions; and
Figure 4 comprises a cross-sectional view of a preferred embodiment of a fundamental component of the safety device of this invention.

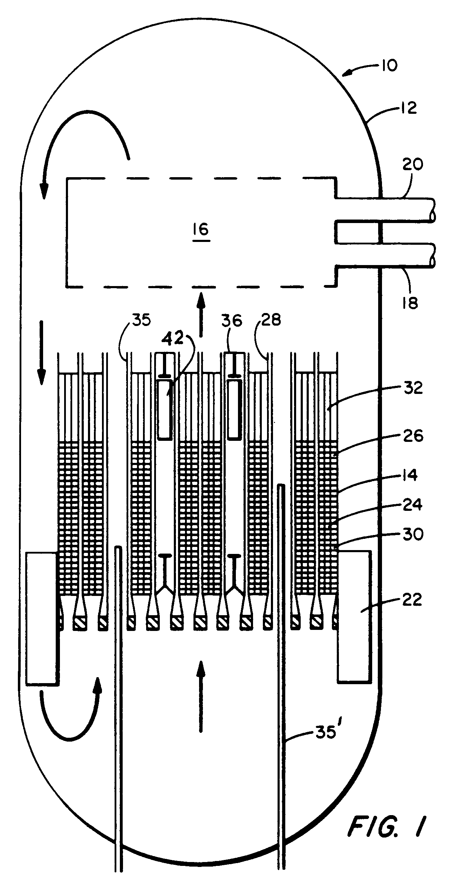

Referring to Figure 1 of the drawing, a type of nuclear reactor 10 comprises a pressure vessel 12 enclosing therein a core of fissionable fuel 14. The body of fuel 14 is positioned generally intermediate the vessel 12 and inward from the vessel's wall to provide an annular flow path between the fuel core 14 and wall of the pressure vessel 12.

Spaced above the fuel core 14 is a convention fluid-to-fluid heat exchanger 16 having an inlet connection 18 and outlet connection 20 for the circulation therethrough of a heat transporting fluid.

One or more pumps 22 are suitably positioned, such as adjacent to the fuel core 14 and the annular flow path between the fuel core and vessel wall, to induce circulation of liquid metal coolant throughout the pressure vessel 12. The pumps 22 and other components are typically arranged to provide for a coolant flow-pattern of upward through the core of heat generating fissionable fuel 14 and continuing on into and through the overhead heat exchanger 16. Thus, the thermal energy produced in the fuel core is carried away by the circulating liquid metal coolant and transferred through the heat exchanger 16 to a heat transporting fluid which carries the energy to a location of its use such as generating power. The pump circulated coolant contained within the pressure vessel 12, on passing through the heat exchanger 16, reverses its direction of flow and follows an annular path downward between the heat exchanger 16 then the fuel core 16 and the wall of the pressure vessel 12. In the embodiment shown in Figure 1, the pumps continue impelling the liquid coolant downward and then around back up through the fuel core 14, to repeat and continue the cycle of removing heat from the core and conveying it to the heat exchanger.

Common liquid metal cooled nuclear fission reactors utilize sodium metal as the coolant-heat conveying medium for circulation throughout the pressure vessel. However, any metal of suitable melting and chemical properties can be used. When sodium is utilized as the coolant, electromagnetic pumps can be employed which have no moving parts and only require a connection to a source of electrical power.

The fuel core 14 of typical liquid metal cooled nuclear reactors comprise a plurality of parallel aligned sealed tube containers 24 enclosing pellets of fissionable fuel which are grouped into a multiplicity of bundles 26. Each bundle 26 of fuel tube containers 24 is retained within an open ended surrounding channel unit 28, commonly of a hexagonal cross-section. The combined bundles 26, containing the grouped fuel tubes 24 within surrounding channel units 28, all vertically longitudinally aligned with the direction of coolant flow, constitute the fuel core 14. Thus the coolant liquid flows parallel to and along the length of the fuel tubes 24 aligned in the core 14, whereby it absorb thermal energy from the fissionable fuel and convey it away to the heat exchanger 16.

Fissionable fuel pellets 30 typically occupy only the lower portions of the sealed tubes 24, for example about three quarters of the length from the bottom, to provide an upper plenum region 32 as a reservoir for retaining gaseous fission products. Dispersed throughout the fuel core 14 are several passages 35 devoid of any fuel tubes and a channel unit to provide free passages through the fuel core 14 for movement of conventional control rods 35′ into and out from the fuel core by suitable mechanical or hydraulic means.

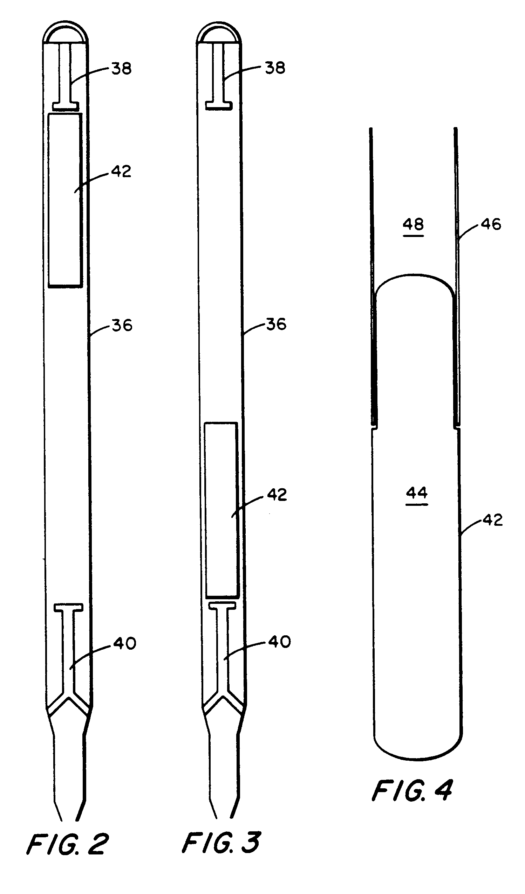

In accordance with the safety improvement of this invention, one or more of the bundles 26 of fuel tubes 24 is replaced with a channel-like unit providing an elongated housing 36 having a closed upper end, and retaining the open lower end of the fuel tube containing channels 28. Within each elongated housing 36, an upper stop member 38 extends downward from the closed top of the elongated housing 36, and a lower stop member 40 mounted on a spider structure extends upward from adjacent to the lower open end of the elongated housing 36, as seen in Figures 2 and 3.

Intermediate the stop members 38 and 40 within the channel unit 36, is a free floating sealed canister 42 containing a neutron absorbing material such as boron carbide. Canister 42 can freely move both upwards and downwards within the elongated housing 36 provided by the channel-like unit in a span between the stop members 38 and 40.

Accordingly, when a nuclear reactor 10 is operating in a normal manner, the pump(s) induced circulating flow of the liquid metal coolant - heat conveying medium flows upward through the fuel core 14. The coolant, under pressure from the pump(s) enters the open lower end of the elongated housings 36, compressing the gas contents thereof as it is forced up the housing. The hydraulic force of the medium raises or floats the free moving canister 42 containing a neutron absorbent upward within the housing 36 until its rise is terminated by the stop member 38 in its upper portion as shown in Figure 2. The positioning or length of the stop member 38 within the housing 36 relative to the dimension of the canister and location of fissionable fuel within the core 14 is determined so as to provide for the canister 36 to be positioned above the fuel material when the hydraulic pressure of the circulating coolant raises it to its uppermost limit. Thus, the neutron absorbing material is automatically positioned beyond the fissionable fuel during normal operation and thereby has a minimal inhibiting effect upon the fission reaction which is normally controlled or regulated by the control rods 35′.

However, upon termination of the pump(s) circulating the temperature modulating coolant, either by design or malfunction , and in turn the cessation of the flow of coolant through the fuel core, this removal of the upward applied hydraulic pressure will permit the canister 42 of neutron absorbent material to drop down to contact the lower stop member 40. The positioning or length of the stop member 40 within the housing 36 relative to the dimension of the canister and location of the fissionable fuel within the core 14 is determined so as to provide for the canister 36 to be positioned substantially within the mass of fuel material when the upward hydraulic pressure is eliminated.

The presence of one or more canisters 42 containing an appropriate quantity of neutron absorbent material within the mass of fissionable fuel will reduce and/or suppress the nuclear fission reaction according to predetermined designs.

Thus, it is apparent that the fission reaction controlling neutron absorbent material within the canister(s) 42 will be held by the inherent force of gravity in a position within the mass of fissionable material, whereby it precludes unwanted reactivity, at all times except when the nuclear reactor is normally functioning with adequate coolant circulation.

Moreover, the distinctive safety means of this invention is inherently self-activating without any assistance or need for mechanical or hydraulic devices, operating personnel, or indicating instruments or means, or sources of power. Accordingly, the safety means of this invention is essentially fail safe.

A preferred embodiment for the design of the canister 42 is shown in Figure 4. This canister 42 comprises a sealed container 44 provided with an annular sleeve 46 surrounding its upper end and continuing upward therefrom a distance to form an open ended receptacle 48. The surrounding annular sleeve 46 should be affixed to a recessed portion of the canister 42 whereby its exterior surface is flush with the surface of the balance of the canister in order to provide a continuous cylindrical surface of the same diameter. Such a surface facilitates the free floating of the canister within the elongated housing 36.

With this upper end open receptacle of the canister 42, liquid coolant will initially be forced up into the elongated housing 36 by the pump(s) 22 and will "spill" over into the open receptacle filling it. This original filling of the receptacle with coolant such as sodium will be retained and it serves to enhance the cooling of the canister to minimize the boron carbide, or other neutron absorbents, peak temperature within the canister.

A further aspect is that when the pump(s) force the liquid metal coolant up into the elongated housing adjacent to the fuel, compressing the gas enclosed therein, the liquid metal coolant such as sodium acts as a reflector for the neutrons, scattering them back towards the fuel thereby adding to the core reactivity. When the pumping is eliminated, the force of the compressed gas within the elongated housing causes the coolant to recede back downward and the remaining gas acts as a poor reflector of neutrons whereby few are scattered back towards the fuel to contribute to its reactivity.

## Claims

1. A nuclear reactor pressure vessel (12) enclosing therein a core (14) of fissionable fuel retained within a plurality of elongated containers (24) assembled adjacent to each other in a generally vertical, parallel group, said pressure vessel containing a liquid metal coolant-heat conveying medium comprising a metal which is liquid at the range of the reactor operating temperatures, pumping means (22) for circulating the liquid metal coolant-heat conveying medium upward through the core of fissionable fuel and to a heat transferring unit (16) and then back up again through the fuel core for removing thermal energy generated in the core by fissioning fuel, and at least one safety device located within the fuel core, characterized by each safety device comprising a generally vertical, elongated housing (36) closed at its upper end and containing a gas and having an opening at its lower end whereby upward circulating coolant-heat conveying liquid metal can enter into the lower end of the elongated housing, said elongated housing having an upper (38) and a lower (40) stop member adjacent the ends thereof and a free floating sealed canister (42) retained therein between the stop members adjacent each end thereof and containing a neutron absorbing material whereby said canister of neutron absorbing material can freely move both upwards and downwards within the elongated housing in a span between the stop members in response to degrees of force produced by the entry of liquid metal coolant-heat conveying medium into the opening in the lower end of the elongated housing.

2. The pressure vessel of claim 1, wherein the neutron absorbing material comprises boron carbide.

3. The pressure vessel of claim 1, wherein the liquid metal coolant-heat conveying medium comprises sodium.

4. The pressure vessel of claim 1, wherein the elongated fuel containers are grouped in bundles surrounded by channels (35) which are of the same cross-sectional configuration and dimension as the canister containing elongated housing.

5. The pressure vessel of claim 1, wherein the fissionable fuel does not occupy the upper most area of the elongated fuel containers.

## Patentansprüche

1. Kernreaktor-Druckbehälter (12), der darin einen Kern (14) aus spaltbarem Brennstoff, der in mehreren langgestreckten Behältern (24) gehaltert ist, die nebeneinander in einer im wesentlichen vertikalen, parallelen Gruppe montiert sind, wobei der Druckbehälter ein wärmeübertragendes Kühlmittel enthält, das ein Metall aufweist, das in dem Bereich der Reaktorbetriebstemperaturen flüssig ist, eine Pumpeinrichtung (22) zum Umwälzen des wärmeübertragenden Flüssigmetall-Kühlmittels nach oben durch den Kern aus spaltbarem Brennstoff und zu einer Wärmeübertragungseinheit (16) und dann wieder zurück durch den Brennstoffkern zum Abführen thermischer Energie, die in dem Kern durch sich spaltenden Brennstoff erzeugt ist, und wenigstens eine Sicherheitsvorrichtung einschließt, die in dem Brennstoffkern angeordnet ist, dadurch gekennzeichnet, daß jede Sicherheitsvorrichtung ein im wesentlichen vertikales, langgestrecktes Gehäuse (36) aufweist, das an seinem oberen Ende geschlossen ist und ein Gas enthält und eine Öffnung an seinem unteren Ende aufweist, wodurch nach oben zirkulierendes, wärmeübetragendes Flüssigmetall-Kühlmittel in das untere Ende des langgestreckten Gehäuses eintreten kann, wobei das langgestreckte Gehäuse ein oberes (38) und ein unteres (40) Anschlagteil neben seinen Enden und einen frei-schwimmenden, abgedichteten Kanister (42) aufweist, der darin zwischen den Anschlagteilen neben jedem Ende gehaltert ist und ein neutronenabsorbierendes Material enthält, wobei der Kanister von neutronenabsorbierendem Material sich frei bewegen kann sowohl nach oben als auch nach unten innerhalb des langgestreckten Gehäuses in einer Spanne zwischen den Anschlagteilen in Abhängigkeit von den Kraftgraden, die durch den Eintritt des wärmeübetragenden Flüssigmetall-Kühlmittels in die Öffnung in dem unteren Ende des langgestreckten Gehäuses erzeugt sind.

2. Druckbehälter nach Anspruch 1, wobei das neutronenabsorbierende Material Borkarbid aufweist.

3. Druckbehälter nach Anspruch 1, wobei das wärmeübetragende Flüssigmetall-Kühlmittel Natrium aufweist.

4. Druckbehälter nach Anspruch 1, wobei die langgestreckten Brennstoffbehälter in Bündeln gruppiert sind, die von Kanälen (35) umgeben sind, die die gleiche Querschnittskonfiguration und Abmessung aufweisen, wie das den Kanister enthaltende langgestreckte Gehäuse.

5. Druckbehälter nach Anspruch 1, wobei der spaltbare Brennstoff nicht den obersten Bereich der langgestreckten Brennstoffbehälter einnimmt.

## Revendications

1. Cuve sous pression (12) pour réacteur nucléaire qui enferme un coeur (14) de combustible fissible retenu dans une pluralité de conteneurs allongés (24) assemblés adjacents les uns des autres dans un groupe parallèle, globalement vertical, ladite cuve sous pression contenant un fluide d'évacuation de la chaleur et de refroidissement en métal liquide fait d'un métal qui est liquide dans la plage des températures de fonctionnement du réacteur, des moyens de pompage (22) pour mettre en circulation le fluide d'évacuation de la chaleur et de refroidissement en métal liquide afin qu'il monte à travers le coeur de combustible fissible jusqu'à une unité de transfert thermique (16) puis revienne à travers le coeur de combustible pour récupérer l'énergie thermique produite dans le coeur par la fission du combustible, et au moins un dispositif de sécurité placé à l'intérieur du coeur de combustible,
caractérisée en ce que chaque dispositif de sécurité comprend une enceinte allongée (36), généralement verticale, fermée en son extrémité supérieure et contenant un gaz, avec une ouverture en son extrémité inférieure de sorte que le métal liquide de refroidissement et d'évacuation de la chaleur qui circule peut pénétrer dans l'extrémité inférieure de l'enceinte allongée, ladite enceinte allongée comportant des organes d'arrêt supérieur (38) et inférieur (40) adjacents à ses extrémités et un récipient métallique (42) étanche qui flotte librement, retenu dans celle-ci entre les organes d'arrêt adjacents à chaque extrémité et contenant un matériau absorbeur de neutrons, ce qui fait que ledit récipient de matériau absorbeur de neutrons peut librement monter et descendre à l'intérieur de l'enceinte allongée, sur une distance comprise entre les organes d'arrêt, en réponse à la valeur de la force produite par l'entrée du fluide d'évacuation de la chaleur et de refroidissement en métal liquide dans l'ouverture de l'extrémité inférieure de l'enceinte allongée.

2. Cuve sous pression selon la revendication 1, dans laquelle le matériau absorbeur de neutrons est du carbure de bore.

3. Cuve sous pression selon la revendication 1, dans laquelle le fluide d'évacuation de la chaleur et de refroidissement en métal liquide est du sodium.

4. Cuve sous pression selon la revendication 1, dans laquelle les conteneurs allongés de combustible sont groupés en grappes entourées par des canaux (35) qui ont la même configuration et la même taille en section transversale que l'enceinte allongée contenant le récipient métallique.

5. Cuve sous pression selon la revendication 1, dans laquelle le combustible fissible n'occupe pas la région la plus haute des conteneurs allongés de combustible.
